# EUROPEAN PATENT SPECIFICATION

(11) **EP 3 611 063 B1**
(45) Date of publication and mention of the grant of the patent: **17.03.2021**
(21) Application number: 19187385.0
(22) Date of filing: 19.07.2019
(51) Int. Cl.: B60T 7/20

(54) **TRACTOR-TRAILER CONNECTION DEVICE**
ZUGFAHRZEUG-ANHÄNGER-VERBINDUNGSANORDNUNG
SYSTÈME DE CONNEXION DE TRACTEUR AVEC REMORQUE

(30) Priority: 26.07.2018 IT 201800007544
(43) Date of publication of application: 19.02.2020
(73) Proprietor: SAFIM S.p.A., 41123 Modena (IT)
(72) Inventor: Mamei, Eronne, 41123 Modena (IT); Mamei, Enrico, 41123 Modena (IT); Mamei, Andrea, 41123 Modena (IT)
(74) Representative: Brunacci, Marco

(56) References cited:
- EP-A1- 0 544 104
- EP-A1- 2 591 963
- EP-A1- 3 225 473
- NZ-A- 548 849
- US-A1- 2008 139 030

## Description

The present invention relates to a device for the towing vehicle-trailer connection.

As is well known, to date the towing vehicles are connected to their relevant trailer by means of a connecting device that makes it possible to place the respective braking systems into communication with each other, so that the braking of the towing vehicle operated by the operator also causes the braking of the towed trailer.

The trailer's braking system is then piloted by the braking system of the prime mover in order to synchronize the braking forces operating on these.

According to the regulations in force, the connecting device between the towing vehicle and the relevant trailer must comprise a portion that can be connected to the trailer and provided with a pair of female joints intended to engage in the corresponding male joints that can be connected to the towing vehicle.

In particular, in the new generation of trailers, there is a first female joint communicating with a control line that can be connected to the braking system of the trailer and a second female joint communicating with an additional line that can be connected to the parking brake and/or automatic brake of the trailer itself.

The additional line is therefore the line that allows the on-off braking of the trailer to be engaged in an emergency, i.e. in the event of the trailer being detached from the towing vehicle.

These regulations have also changed the braking rates, reducing them, in order to bring them closer to those of road vehicles.

However, this has led to a number of drawbacks, the main of which is linked to the agricultural vehicles built according to the previous regulations, i.e. provided with only one joint, which defines the so-called braking control line. In particular, in the case of a trailer built in accordance with the previous regulation and coupled with a newly built towing vehicle, the braking pressure of the towing vehicle transmitted to the trailer is insufficient to command its brakes, with the result that the trailer does not brake properly and thus exerts a thrust action on the tractor.

To overcome this problem, a coupling device was devised, being the subject of European patent application EP3225473, which allows the braking rate being changed depending on whether the trailer is provided with one or two female joints. In particular, the device, to which the EP3225473 invention relates, comprises two piloting elements for the distributor of the relevant brake-trailer valve, which is adapted to regulate the work fluid pressure along the control line, and control means that can be activated to interact with one of the piloting elements. In particular, the control means can be moved between a home position, wherein they allow the displacement of both piloting elements, so as to exert a greater force on the distributor and obtain a greater braking ratio, and a work position, wherein they allow the displacement of only one of them, thus obtaining a lower braking ratio. These control means can be operated by the valve means housed inside the second male joint, which means, by opening as a result of the interaction with the second female joint, cause the control means to displace to the work position and consequently lock one of the piloting elements.

This coupling device also has some drawbacks, however, in particular related to the coupling of a recently built towing vehicle with an Italian trailer built according to Italian regulations (Cuna standard), which provides for the presence of a single female joint but at the same time requires different braking ratios compared to the single line trailers used in other countries. In particular, this type of trailer requires that the trailer is free with pressures ranging from 10 bar to 15 bar and at the same time requires a high braking ratio like the old generation trailers described above. Since the work fluid pressure coming from the towing vehicle and flowing through the second male joint ranges from 15 bar to 35 bar, an adapter (Cuna adapter) is used which is able to adjust the work fluid pressures coming from the towing vehicle to those required by the trailer. This adapter is provided with two female joints adapted to receive the male joints connected to the towing vehicle and with only one male joint adapted to couple with the trailer.

In this case, in fact, the device, to which EP3225473 patent relates, would be inadequate because the second female joint of the adapter described above would activate the control means and consequently reduce the braking ratio. The main aim of the present invention is to devise a device for the towing vehicle-trailer connection which allows satisfying the braking ratio required for each type of trailer.

Within this aim, one object of the present invention is therefore to devise a device for the towing vehicle-trailer connection that can be used both in the case of new generation trailers provided with two female joints, and in the case of old generation trailers provided with only one female joint, as well as in the case of trailers with only one female joint but which require an adapter to adjust the pressures of the work fluid coming from the towing vehicle.

Another object of the present invention is to devise a device for the towing vehicle-trailer connection that allows overcoming the aforementioned drawbacks of the prior art in the context of a simple, rational, easy, effective to use and affordable solution.

The aforementioned objects are achieved by the present device for the towing vehicle-trailer connection according to claim 1.

Other characteristics and advantages of the present invention will be more evident from the description of a preferred, but not exclusive, embodiment of a device for the towing vehicle-trailer connection, illustrated as an indicative, but not limiting example in the attached tables of drawings in which:

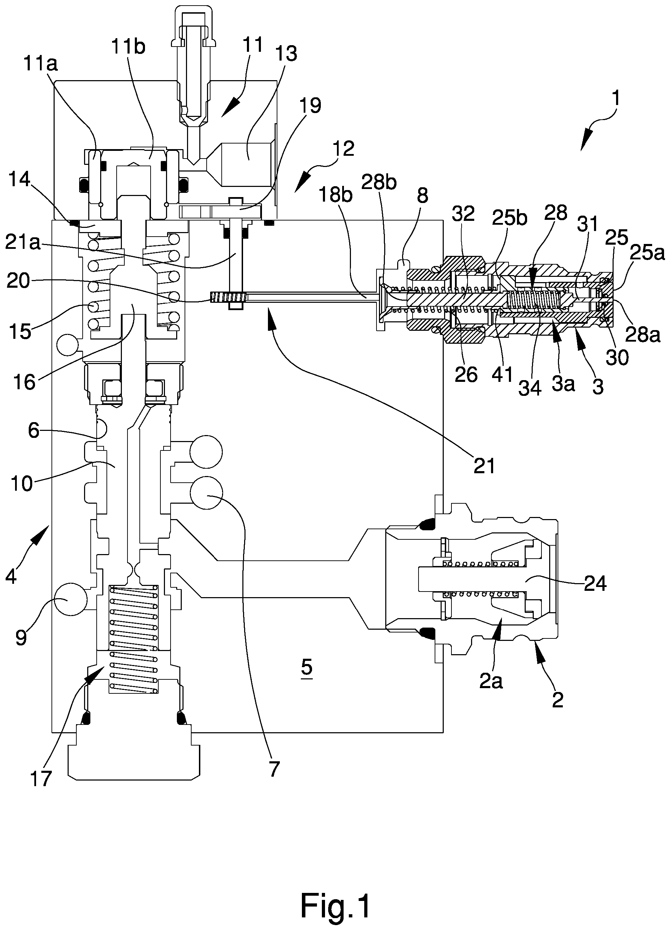

Figure 1 is a sectional view of a connecting device according to the invention;
Figure 2 is a sectional view of the connecting device shown in Figure 1, in a first embodiment, with the male joints disengaged from the relevant female joints;
Figure 3 is a sectional view of the connecting device in Figure 1, in the first embodiment, with the male joints fitted inside the relevant female joints;
Figure 4 is a sectional view of the connecting device shown in Figure 1, in a second embodiment, with the male joints disengaged from the relevant female joints;
Figure 5 is a sectional view of the connecting device in Figure 1, in the second embodiment, with the male joints fitted inside the relevant female joints.

With particular reference to these figures, reference numeral 1 globally indicates a device for the towing vehicle-trailer connection.

The device 1 comprises a first male joint 2 and a second male joint 3 associable with a towing vehicle and intended to be connected to the braking system and to the automatic and/or parking brake of the trailer.

The device 1 then comprises at least one first female joint (not shown in the figures) connectable to the trailer and adapted to receive the first male joint 2.

According to the invention, the device 1 also comprises a second female joint 23 connectable to the trailer and adapted to receive the second male joint 3.

The first female joint and the second female joint 23 can be directly associated with the trailer, or they can be defined on an adapter device which is adapted to be placed between the towing vehicle and the trailer. This adapter device can be, e.g., of the type of a Cuna adapter, i.e. provided with a pair of female joints adapted to receive the corresponding male joints and with a single joint for the connection to the trailer.

Both the first and the second male joints 2 and 3 are provided with first and second valve means 2a and 3a, respectively, which can be moved between an open position, wherein they allow the passage of a work fluid through the relevant joint, and a closed position, wherein they prevent the passage of the work fluid. The first and second valve means 2a and 3a move from the closed position to the open position due to the insertion of the respective male joints 2, 3 inside the corresponding female joints.

The first valve means 2a comprise a closing element 24 which is housed in a sliding manner inside the first male joint 2 between the open position and the closed position.

The second valve means 3a comprise at least one plugging element 25 housed in a sliding manner inside the second male joint 3 between the closed position and the open position. The plugging element 25 moves from the closed position to the open position counteracting the elastic means 26.

According to the invention, the second female joint 23, in turn, comprises at least one abutment element 27 defining an abutment surface 27a which is adapted to interact with the plugging element 25 to displace it from the closed position to the open position following the insertion of the second male joint 3 inside it.

The device 1 then comprises a brake-trailer valve 4 which, in turn, comprises a body 5 wherein at least one seat 6 is formed which communicates with a supply port 7, connectable to a source of the work fluid at a first pressure (e.g. a pump) and with at least one discharge port 9 of the work fluid. In the embodiment shown in the illustrations, the seat 6 is also communicating with an additional port 8, connectable to a source of the work fluid at a second pressure and communicating with the second male joint 3. As an alternative to the additional port 8, the supply port 7 can be connected to the second male joint 3 by means of a pressure reducer.

Inside the seat 6 a distributor 10 is housed in a sliding manner, which is adapted to place the first male joint 2 in communication with the supply port 7 or with the discharge port 9 depending on the braking conditions. In the event of the braking pressure of the trailer achieving a balance value, the distributor 10 is adapted to close the connection between the first male joint 2 and the ports 7 and 9.

Suitably, the seat 6 also has a further port 9b, which is placed in communication with the supply port 7 by the distributor 10 to discharge the amount of work fluid exceeding the amount required for braking the trailer.

More specifically, the additional port 8 is connectable to a pressure control device (not shown in the figures), which is adapted to keep the work fluid pressure sent to the second male joint 3 substantially constant in order to keep the trailer's automatic and/or parking brake deactivated while running and to reduce the work fluid pressure to zero, in order to activate the trailer's automatic and/or parking brake, under emergency conditions or following the activation of the parking and emergency brake of the towing vehicle.

In the embodiment shown in the figures, the brake-trailer valve 4 is directly associated with the male joints 2 and 3, i.e. the latter are directly associated with the body 5 in which the seat 6 is obtained.

In an alternative embodiment, not shown in the figures, the brake-trailer valve 4 is separated from the male joints 2 and 3, which are hydraulically connected to the seat 6.

The device 1 then comprises piloting means 11 for piloting the distributor 10, which are connectable to the braking system of the towing vehicle.

The piloting means 11 comprise at least a first and a second piloting element, identified in the figures with the reference numerals 11a and 11b, adapted to interact with the distributor 10.

The piloting elements 11a and 11b are placed in communication with a piloting channel 13, connectable to the braking system of the towing vehicle.

The piloting elements 11a and 11b are adapted to lean against a plate 14, which interacts with the distributor 10 by means of the elastic means 15 placed between the plate itself and a movement element 16 locked together with the distributor 10. The elastic means 15 are therefore adapted to exert a predefined force on the distributor 10 following the increase in pressure in the piloting channel 13 and, therefore, the displacement of the piloting elements 11a, 11b.

On the opposite side of the piloting means 11, with respect to the distributor 10, counteracting means 17 are provided which are adapted to exert a predefined force on the distributor itself following the pressure increase in the piloting channel 13 and, therefore, the displacement of the piloting elements 11a, 11b. The distributor 10 has a reaction surface communicating with the first male joint 2 and operating in the opposite direction to the piloting means 11; the ratio between the reaction surface and the surfaces of the piloting elements 11a and 11b determines the piloting ratio of the device 1.

The device 1 also comprises control means 12 operable by the second valve means 3a and operationally connected to one of the piloting elements 11a, 11b. The control means 12 are movable between a home position, wherein they allow the displacement of both the piloting elements 11a, 11b, and a work position, wherein they are adapted to lock the displacement of one of the piloting elements 11a, 11b.

The second valve means 3a comprise at least one thrust element 28 housed in a sliding manner inside the second male joint 3 and adapted to interact with the control means 12 in order to displace them from the home position to the work position.

Therefore, when the thrust element 28 interacts with the control means 12, bringing them to the work position, only one of the piloting elements, the 11b, operates on the distributor 10, so that the device 1 will have a first braking rate.

When, on the other hand, the thrust element does not interact with the control means 12, which remain in the home position, both the piloting elements 11a and 11b are free to move and interact with the distributor 10, so that the device 1 has a second braking rate different from the first braking rate mentioned above.

The first and the second piloting elements 11a and 11b can be arranged coaxially with each other, as shown in the embodiments shown in the figures, where the first piloting element 11a is fitted externally to the second piloting element 11b.In this case, therefore, the first piloting element 11a has a larger diameter than the second piloting element 11b.

In an alternative embodiment, not shown in the illustrations, the first and the second piloting elements 11a and 11b can be arranged parallel to each other.

Advantageously, the control means 12 comprise at least one locking element 19 operable by the thrust element 28 and adapted to interact with one of the piloting elements 11a, 11b to lock the displacement thereof. In the embodiment shown in the figures, the locking element 19 is adapted to interact with the first piloting element 11a, i.e. with the outermost piloting element.

The thrust element 28 can coincide with the locking element 19, acting directly on one of the piloting elements 11a, 11b, or it can be adapted to interact directly with it.

In another alternative embodiment, the control means 12 comprise connecting means 21 of the thrust element 28 to the locking element 19, so as to bring the latter to the interference position following the interaction of the connecting means themselves with the thrust element itself. The connecting means 21 can be of the mechanical, electrical or electro-magnetic type, as already known to the technician in the sector.

In the event of the connecting means 21 being of the electrical type, they may comprise e.g. a switch of the ON-OFF type which can be activated by the thrust element 28 when the second valve means 3a reach the open position to bring the locking element 19 to the interference position.

In the event, on the other hand, of the connecting means 21 being of the electro-magnetic type, they can comprise e.g. a switch of the REED type and the thrust element 28 is provided with at least one magnetic element adapted to interact with the switch of the REED type, the thrust element 28 being adapted to activate the switch of the REED type when the second valve means 3a reach the open position to bring the locking element 19 to the interference position.

In a further embodiment, the connecting means 21 comprise at least one potentiometer which can be activated when the second valve means 3a reach the open position to bring said locking element 19 to the interference position.

In the embodiments shown in the figures, the connecting means 21 are of the mechanical type and comprise at least one cam element 18b which is capable of being displaced due to the interaction with the thrust element 28 and adapted to control the displacement of the locking element 19, e.g. by means of a shaft 21a. More specifically, due to the interaction with the thrust element 28, the cam element 18b rotates around a relevant axis counteracting the elastic means 20 and causes the displacement of the shaft 21a, which sets in rotation the locking element 19 which is, in turn, hinged around a relevant axis.

According to the invention, the thrust element 28 is movable in a sliding manner with respect to the plugging element 25 and has at least a first end 28a facing outwardly of the second male joint 3 and a second end 28b, opposed to the first end 28a, adapted to interact with the control means 12.

Advantageously, the plugging element 25 has at least one through hole 29 facing outwardly of the second male joint 3 and the portion of the thrust element 28 defining the first end 28a is inserted in a sliding manner inside the through hole 29.

Appropriately, sealing means 30 are placed between the plugging element 25 and the thrust element 28, at the through hole 29.

In particular, the plugging element 25 has a first extremity 25a, facing outwardly and at which the through hole 29 is defined, and a second extremity 25b opposite the first extremity 25a. In addition, the plugging element 25 has an impact surface 36 which is adapted to rest on a counter-impact surface 37 defined by the second male joint 3 and adapted to define the closed position of the plugging element itself. The counter-impact surface 37 therefore defines an end-of-stroke position of the plugging element 25.

In the preferred embodiment shown in the figures, the thrust element 28 comprises at least a first pusher element 31, which defines the first end 28a, at least a second pusher element 32, separate from the first pusher element 31 and defining the second end 28b, and at least one mechanical connecting element 33 of the pusher elements 31 and 32. Between the first and the second pusher elements 31 and 32, elastic means 34 are placed which are adapted to allow the reciprocal movement of the pusher elements themselves in case of an emergency. Preferably, the elastic means 34, e.g. of the type of a helical spring, have high stiffness so that the first and the second pusher elements 31 and 32 behave substantially as a single body piece.

More specifically, the connecting element 33 has at least a first and a second reference surface, identified in the figures with the numerals 33a and 33b, which are adapted to interact with the first and the second pusher elements 31 and 32, respectively. The first reference surface 33a is adapted to drag the first pusher element 31 during the displacement of the connecting element 33 close to the control means 12, and the second reference surface 33b is adapted to drag the second pusher element 32 during the displacement of the connecting element 33 away from the control means 12 due to the thrust exerted by the elastic means 26.

In the embodiment shown in the illustrations, the connecting element 33 is the type of a hollow body open at its ends, through which are inserted the first and the second pusher element 31 and 32, and inside which the elastic means 34 are housed. The first and the second reference surfaces 33a and 33b are defined by the internal surface of the connecting element 33 and are adapted to interact with a respective pad defined by the portions of the first and the second pusher elements 31 and 32, respectively, inserted inside the connecting element 33. Advantageously, the thrust element 28 is at least partly housed in a sliding manner inside the plugging element 25, which defines at least one stop surface 35 adapted to interact with the thrust element itself to drag it close to the control means 12.

In the embodiment shown in the figures, the plugging element 25 is of the type of a hollow body open at its ends, through which the first and second pusher elements 31 and 32 pass, respectively.

More in detail, the connecting element 33 is housed in a sliding manner inside the plugging element 25. Conveniently, both the plugging element 25 and the connecting element 33 have one or more openings 38 adapted to allow the passage of the work fluid in such a way as to place the external volume of the plugging element 25 in communication with its internal volume and with the internal volume of the connecting element 33, so as to avoid overpressures that could alter the correct movement of the parts involved. In this embodiment, the connecting element 33 has at least one projection 39 which is inserted through a guiding slot 40 formed on the plugging element 25.

The stop surface 35 defined by the plugging element 25 is adapted to interact with the connecting element 33 in order to drag it, during the displacement of the plugging element itself from the closed position to the open position, close to the control means 12. In other words, during its displacement from the closed position to the open position, and therefore close to the second end 28b of the thrust element 28, the plugging element 25 can carry out (in the case wherein the thrust element 28 is stationary) a first stroke length during which it is free to move with respect to the thrust element itself, until the stop surface 35 contacts the connecting element 33, so that during the following stroke length, the movement of the plugging element 25 in the same direction also drags the connecting element 33, which, in turn, drags the first pusher element 31 by means of the first reference surface 33a.

Preferably, at least one bottom element 41 is provided, which is locked together with the plugging element 25 in a sliding manner and arranged at its second extremity 25b. The bottom element 41 can be separate from the plugging element 25 or can be made in a single body piece with it. The bottom element 41, in turn, has a through hole inside which the second pusher element 32 is inserted in a sliding manner.

The bottom element 41 defines at least one contact surface 42, opposite the stop surface 35, which is adapted to interact with the connecting element 33 to drag it during the displacement of the plugging element 25 from the open position to the closed position.

More particularly, the elastic means 26 rest on the bottom element 41, pushing it in contact at least with the plugging element 25.

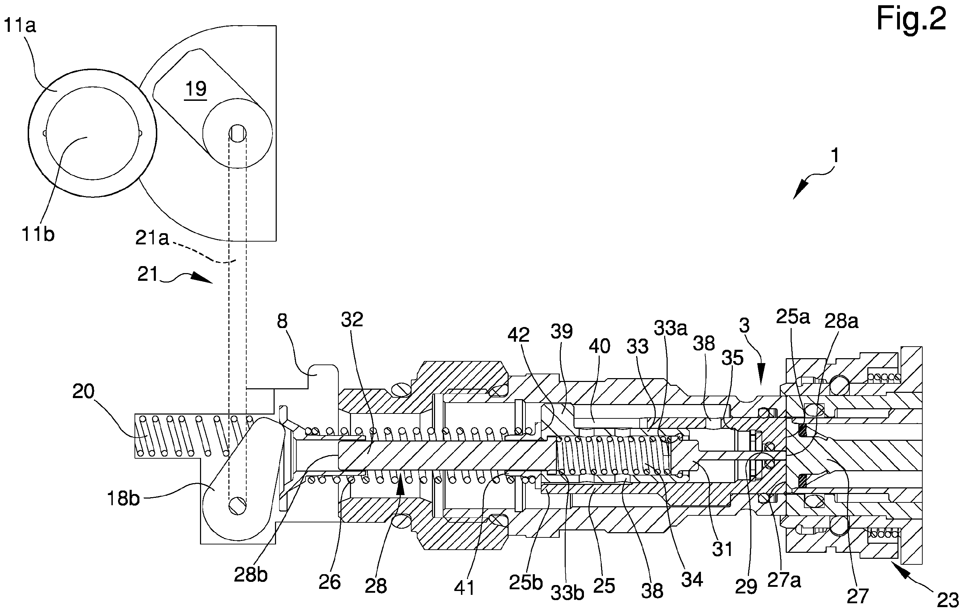

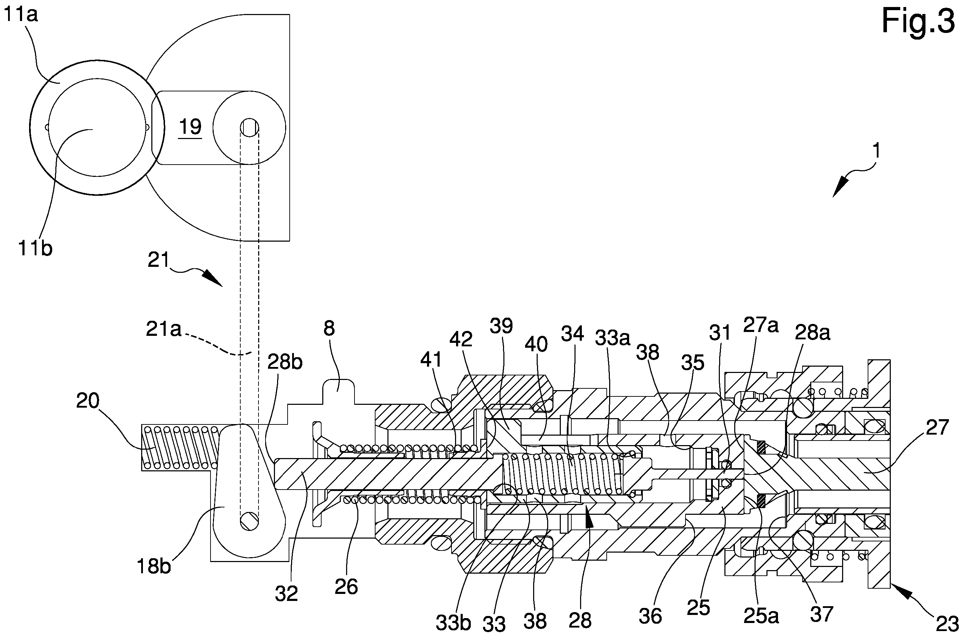

In the first embodiment shown in Figures 2 and 3, the abutment surface 27a is substantially (except for machining tolerances) flat and is adapted to interact with the first end 28a as a result of the insertion of the second male joint 3 into the second female joint 23. Therefore, the thrust element 28, pushed by the abutment element 27, slides with respect to the second male joint 3 and interacts with the control means 12 to displace them from the home position to the work position. In this embodiment, both the plugging element 25 and the first pusher element 31 interact with the abutment element 27 and move simultaneously with respect to the second male joint 3. In this first embodiment, only the second piloting element 11b acts on the distributor 10, thus achieving the first braking rate.

In the embodiment shown in Figures 2 and 3, the contact surface 42 also rests against the connecting element 33 and thus allows the force of the elastic means 26 to be transferred to the connecting element itself, pushing it towards the abutment element 27 as a result of the displacement of the plugging element 25 towards the closed position. During this displacement, the connecting element 33, in turn, contacts the second pusher element 32 by means of the second reference surface 33b, dragging it away from the control means 12.

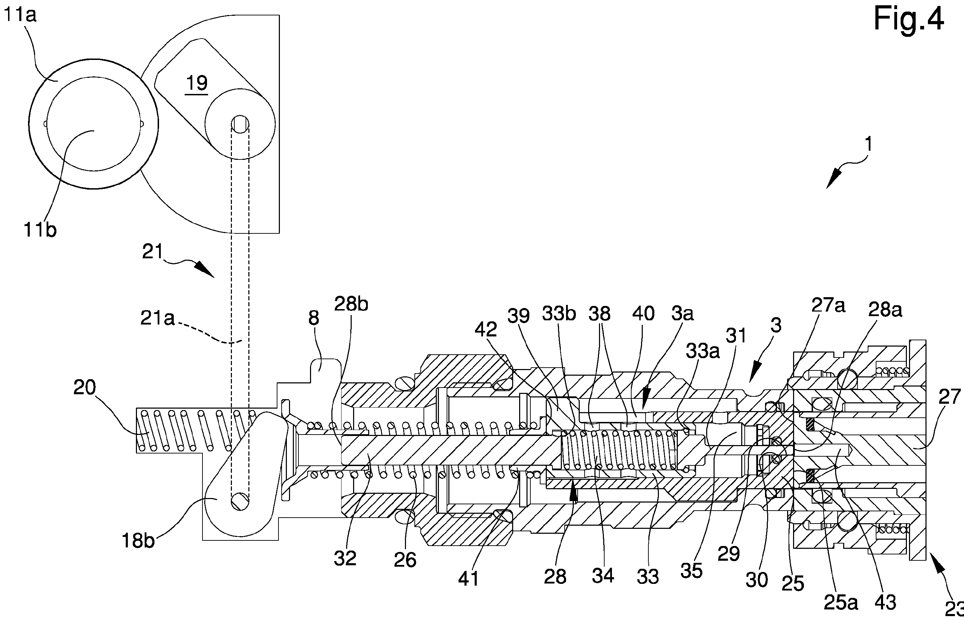

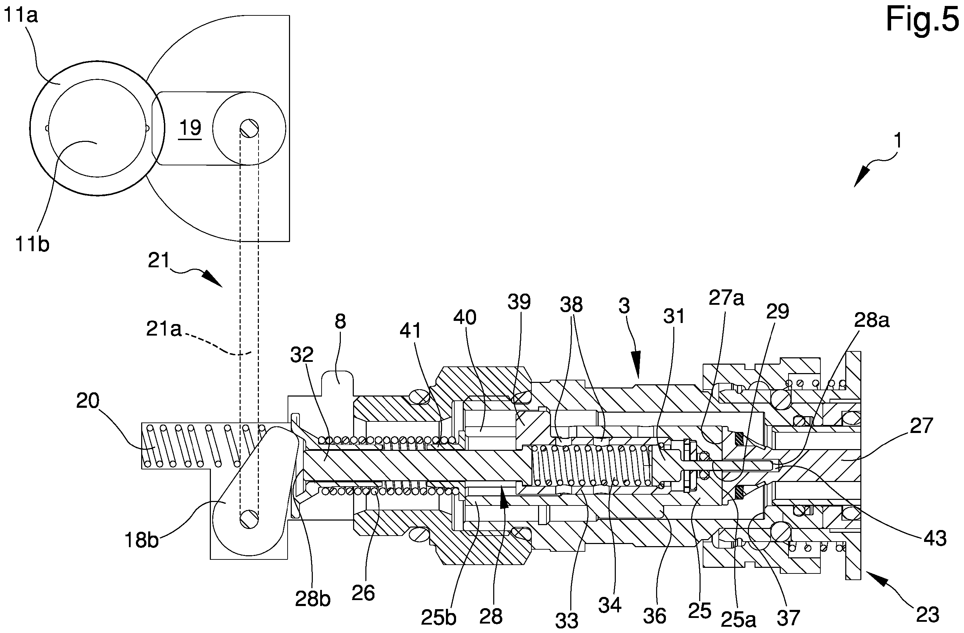

In the second embodiment shown in Figures 4 and 5, on the other hand, the abutment element 27 has at least one housing seat 43 which faces the abutment surface 27a and which is adapted to receive the first end 28a of the thrust element 28 following the insertion of the second male joint 3 into the second female joint 23. The plugging element 25 therefore slides with respect to the thrust element 28, which does not interact with the control means 12, which thus remain in the home position. More specifically, the plugging element 25, pushed by the abutment element 27, moves from the closed position to the open position and completes a first stroke length during which the thrust element 28 remains stationary due to the insertion of the first end 28a inside the housing seat 43. When the stop surface 35 contacts the connecting element 33, this is dragged away from the closed position by the plugging element 25. The thrust element 28 then completes a stroke length close to the control means 12 without interacting with these, which are then kept in the home position.

In this second embodiment, both the piloting elements 11a, 11b operate on the distributor 10, thus obtaining a second braking rate higher than the first braking rate mentioned above.

If only the first female joint is provided, the plugging element 25 housed in the second male joint 3 remains in the closed position and the control means 12 in the home position. Also in this case, therefore, on the distributor 10 operate both the piloting elements 11a, 11b thus achieving the second braking rate.

The operation of the present invention is as follows.

In the first embodiment shown in Figures 2 and 3, the insertion of the second male joint 3 inside the second female joint 23 causes the interaction of the plugging element 25 and of the first end 28a of the thrust element 28 with the abutment surface 27a.

Both the plugging element 25 and the thrust element 28 therefore move close to the control means 12, which are intercepted by the second end 28a and moved from the home position to the work position. In particular, as a result of the interaction with the abutment element 27, the first pusher element 31 moves close to the control means 12, transmitting the movement to the second pusher element 32 through the elastic means 34. The displacement of the second pusher element 32 causes, in turn, as a result of the interaction with the second reference surface 33b, the displacement of the connecting element 33.

In the second embodiment shown in Figures 4 and 5, on the other hand, the insertion of the second male joint 3 inside the second female joint 23 causes only the interaction of the abutment element 27 with the plugging element 25, which moves towards the open position, while the first end 28a of the thrust element 28 inserts itself inside the housing seat 43. The thrust element 28 then remains stationary at the beginning, while the plugging element 25 slides with respect thereto, until the stop surface 35 contacts the connecting element 33 and drags it away from the closed position. At this point, the thrust element 28 makes a stroke length close to the control means 12, but of insufficient extension to interact with these, which therefore remain in the home position.

If the device 1 has only the first female joint (not shown in the figures), the second valve means 3a remain in closed position and the control means 12 in the home position.

It has in practice been ascertained that the described invention achieves the intended objects and, in particular, it is underlined that the device to which the present invention relates, allows satisfying the braking rate required by the relevant trailer.

In particular, the presence of the sliding thrust element with respect to the plugging element and provided with an end facing outwards allows both the activation of the control means in the case of coupling with a new generation trailer provided with two traditional female joints (i.e. with flat abutment surface), and the maintenance of the control means in the home position in the case of coupling with an adapter device provided with a second female joint the abutment element of which is provided with the housing seat for the thrust element itself.

The device to which the present invention relates is therefore able to modify the braking rate both in case of a new generation trailer, and therefore provided with two female joints, and in case of an old generation trailer, and therefore provided with only one female joint, as well as in case of an old generation trailer requiring at the same time the use of an adapter to adjust the operating pressures of the work fluid.

In addition, the device to which the present invention relates, allows maintaining the connectivity in accordance with current standards, in particular ISO 16028.

## Claims

1. Device (1) for the towing vehicle-trailer connection, comprising:
- at least a first male joint (2) connectable to the braking system of a trailer, inside said first male joint (2) being provided first valve means (2a) movable between a closed position and an open position wherein they prevent and allow the passage of a work fluid, respectively;
- at least a first female joint connectable to the braking system of a trailer and adapted to receive said first male joint (2);
- at least a second male joint (3) connectable to the automatic and/or parking brake of a trailer, inside said second male joint (3) being provided second valve means (3a) movable between a closed position and an open position wherein they prevent and allow the passage of a work fluid, respectively; wherein said second valve means (3a) comprise at least one plugging element (25) housed in a sliding manner inside said second male joint (3) between said closed position and said open position,
- a brake-trailer valve (4) comprising a body (5) wherein at least one seat (6) is formed communicating with a supply port (7) connectable to a source of a work fluid at a first pressure, and with at least one discharge port (9) of the work fluid;
- at least one distributor (10) housed in a sliding manner inside said seat (6) and movable at least to place said first male joint (2) in communication with said supply port (7) or with said discharge port (9);
- piloting means (11) of said distributor (10) which are connectable to the braking system of a towing vehicle and comprising at least a first and a second piloting element (11a, 11b) which are adapted to interact with said distributor (10);
- control means (12) operable by said second valve means (3a) and movable between a home position, wherein they allow the displacement of both said piloting elements (11a, 11b), and a work position, wherein they are adapted to lock the displacement of one of said piloting elements (11a, 11b), said second valve means (3a) comprising at least one thrust element (28) housed in a sliding manner inside said second male joint (3) and adapted to interact with said control means (12);
where said thrust element (28) is movable in a sliding manner with respect to said plugging element (25) and has at least a first end (28a) facing outwardly of said second male joint (3) and a second end (28b), opposed to said first end (28a), able to interact with said control means (12);
**characterized by** the fact that it comprises at least a second female joint (23) connectable to the braking system of the trailer and adapted to receive said second male joint (3);
wherein said second female joint (23) comprises at least one abutment element (27) defining an abutment surface (27a) which is adapted to interact with said plugging element (25) to displace it from the closed position to the open position following the insertion of said second male joint (3),
and by the fact that said first end (28a) is adapted to operate in conjunction with said abutment element (27).

2. Device (1) according to claim 1, **characterized by** the fact that said plugging element (25) has at least one through hole (29) facing outwardly of said second male joint (3) and by the fact that the portion of said thrust element (28) defining said first end (28a) is inserted in a sliding manner inside said through hole (29).

3. Device (1) according to claim 1 or 2, **characterized by** the fact that said thrust element (28) comprises
- at least a first pusher element (31) defining said first end (28a) and at least a second pusher element (32), separate from said first pusher element (31), defining said second end (28b),
- at least one mechanical connecting element (33) of said pusher elements (31, 32), and elastic means (34) interposed between the pusher elements themselves.

4. Device (1) according to claim 3, **characterized by** the fact that said connecting element (33) has at least a first and a second reference surface (33a, 33b) which are adapted to interact, respectively, with said first pusher element (31) to drag it in its displacement close to said control means (12) and with said second pusher element (32) to drag it in its displacement away from said control means (12).

5. Device (1) according to claim 4, **characterized by** the fact that said connecting element (33) is the type of a hollow body open at its ends, inside which are inserted the corresponding portions of said first and said second pusher element (31, 32), and by the fact that said elastic means (34) are housed inside said connecting element (33).

6. Device (1) according to one or more of the preceding claims, **characterized by** the fact that said thrust element (28) is at least partly housed in a sliding manner inside said plugging element (25).

7. Device (1) according to claim 6, **characterized by** the fact that said connecting element (33) is housed in a sliding manner inside said plugging element (25), this latter defining at least one stop surface (35) which is adapted to interact with said connecting element (33) to drag it in its displacement away from said closed position.

8. Device (1) according to claim 7, **characterized by** the fact that it comprises at least one bottom element (41) locked together in a sliding manner to said plugging element (25) and defining at least one contact surface (42), opposed to said stop surface (35), which is adapted to interact with said connecting element (33) to move it in its displacement close to said closed position.

9. Device (1) according to claim 8, **characterized by** the fact that it comprises elastic means (26) which are adapted to counteract the displacement of said plugging element (25) from the closed position to the open position, wherein said elastic means (26) lean against said bottom element (41) by pushing it in contact with said plugging element (25).

10. Device (1) according to one or more of the preceding claims, **characterized by** the fact that said abutment surface (27a) is adapted to interact with said first end (28a) due to the insertion of said second male joint (3) inside said second female joint (23), said thrust element (28) sliding with respect to the second male joint itself and interacting with said control means (12) to displace them from the home position to the work position.

11. Device (1) according to claim 10, **characterized by** the fact that said plugging element (25) and said first pusher element (31) displace simultaneously relative to said second male joint (3) due to the interaction with said abutment element (27).

12. Device (1) according to one or more of the preceding claims from 1 to 9, **characterized by** the fact that said abutment element (27) comprises at least one housing seat (43) which faces said abutment surface (27a) and by the fact that said thrust element (28) inserts, with said first end (28a), inside said housing seat (43) following the insertion of said second male joint (3) in said second female joint (23), said plugging element (25) sliding with respect to said thrust element (28) and said control means (12) remaining in the home position.

13. Device (1) according to one or more of the preceding claims, **characterized by** the fact that said control means (12) comprise at least one locking element (19) operable by said thrust element (28) and adapted to interact with one of said piloting elements (11a, 11b) to lock the displacement thereof, and by the fact that it comprises connecting means (21) of said thrust element (28) to said locking element (19), so as to bring the latter to the interference position following the interaction of the connecting means themselves with said thrust element (28).

14. Device (1) according to claim 13, **characterized by** the fact that said connecting means (21) are of the mechanical or electrical type.

## Patentansprüche

1. Vorrichtung (1) für die Zugfahrzeug-Anhänger-Verbindung, umfassend:
- mindestens ein erstes männliches Verbindungsstück (2), das mit dem Bremssystem eines Anhängers verbindbar ist, wobei innerhalb des ersten männlichen Verbindungsstücks (2) erste Ventilmittel (2a) vorgesehen sind, die zwischen einer geschlossenen Position und einer geöffneten Position bewegbar sind, in der sie den Durchgang eines Arbeitsfluids verhindern bzw. erlauben;
- mindestens ein erstes weibliches Verbindungsstück, das mit dem Bremssystem eines Anhängers verbindbar ist und zur Aufnahme des ersten männlichen Verbindungsstücks (2) ausgebildet ist;
- mindestens ein zweites männliches Verbindungsstück (3), das mit der automatischen und/oder Feststellbremse eines Anhängers verbindbar ist, wobei innerhalb des zweiten männlichen Verbindungsstücks (3) zweite Ventilmittel (3a) vorgesehen sind, die zwischen einer geschlossenen Position und einer geöffneten Position bewegbar sind, in der sie den Durchgang eines Arbeitsfluids verhindern bzw. erlauben;
wobei die zweiten Ventilmittel (3a) mindestens ein Verschlusselement (25) umfassen, das gleitend innerhalb des zweiten männlichen Verbindungsstücks (3) zwischen der geschlossenen Position und der geöffneten Position untergebracht ist,
- ein Bremsanhängerventil (4), das einen Körper (5) umfasst, in dem mindestens ein Sitz (6) ausgebildet ist, der mit einem Zufuhranschluss (7), der mit einer Quelle eines Arbeitsfluids mit einem ersten Druck verbindbar ist, und mit mindestens einem Auslassanschluss (9) des Arbeitsfluids in Verbindung steht;
- mindestens einen Verteiler (10), der gleitend im Inneren des Sitzes (6) untergebracht und bewegbar ist, um zumindest das erste männliche Verbindungsstück (2) mit dem Zufuhranschluss (7) oder mit dem Auslassanschluss (9) in Verbindung zu bringen;
- Führungsmittel (11) des Verteilers (10), die mit dem Bremssystem eines Zugfahrzeugs verbindbar sind und mindestens ein erstes und ein zweites Führungselement (11a, 11b) umfassen, die zum Zusammenwirken mit dem Verteiler (10) ausgebildet sind;
- Steuermittel (12), die durch die zweiten Ventilmittel (3a) betätigbar und zwischen einer Ausgangsposition, in der sie die Verschiebung der beiden Führungselemente (11a, 11b) erlauben, und einer Arbeitsposition, in der sie die Verschiebung eines der Führungselemente (11a, 11b) sperren können, bewegbar sind, wobei die zweiten Ventilmittel (3a) mindestens ein Vorstoßelement (28) umfassen, das gleitend in dem zweiten männlichen Verbindungsstück (3) untergebracht ist und ausgebildet ist, mit den Steuermitteln (12) zusammenzuwirken; wobei das Vorstoßelement (28) in gleitender Weise in Bezug auf das Verschlusselement (25) bewegbar ist und mindestens ein erstes Ende (28a), das von dem zweiten männlichen Verbindungsstück (3) nach außen gerichtet ist, und ein zweites Ende (28b) aufweist, das dem ersten Ende (28a) gegenüberliegt und in der Lage ist, mit den Steuermitteln (12) zusammenzuwirken;
**dadurch gekennzeichnet, dass** es mindestens ein zweites weibliches Verbindungsstück (23) umfasst, das mit dem Bremssystem des Anhängers verbindbar und ausgebildet ist, das zweite männliche Verbindungsstück (3) aufzunehmen;
wobei das zweite weibliche Verbindungsstück (23) mindestens ein Anschlagelement (27) umfasst, das eine Anschlagfläche (27a) definiert, die ausgebildet ist, mit dem Verschlusselement (25) zusammenzuwirken, um es nach dem Einsetzen des zweiten männlichen Verbindungsstücks (3) von der geschlossenen Position in die geöffnete Position zu verschieben,
und dadurch, dass das erste Ende (28a) ausgebildet ist, um in Verbindung mit dem Anschlagelement (27) zu arbeiten.

2. Vorrichtung (1) nach Anspruch 1, **dadurch gekennzeichnet, dass** das Verschlusselement (25) mindestens ein Durchgangsloch (29) aufweist, das nach außerhalb des zweiten männlichen Verbindungsstücks (3) weist, und dadurch, dass der Abschnitt des Vorstoßelements (28), der das erste Ende (28a) definiert, gleitend in das Durchgangsloch (29) eingesetzt ist.

3. Vorrichtung (1) nach Anspruch 1 oder 2, **dadurch gekennzeichnet, dass** das Vorstoßelement (28) umfasst
- mindestens ein erstes Schubelement (31), das das erste Ende (28a) definiert, und mindestens ein zweites Schubelement (32), das von dem ersten Schubelement (31) getrennt ist und das zweite Ende (28b) definiert,
- mindestens ein mechanisches Verbindungselement (33) der Schubelemente (31, 32), und elastische Mittel (34), die zwischen den Schubelementen selbst angeordnet sind.

4. Vorrichtung (1) nach Anspruch 3, **dadurch gekennzeichnet, dass** das Verbindungselement (33) mindestens eine erste und eine zweite Bezugsfläche (33a, 33b) aufweist, die ausgebildet sind, jeweils mit dem ersten Schubelement (31) zusammenzuwirken, um es in seine Verschiebungsposition in der Nähe der Steuermittel (12) zu ziehen, bzw. mit dem zweiten Schubelement (32), um es in seine Verschiebungsposition von den Steuermitteln (12) weg zu ziehen.

5. Vorrichtung (1) nach Anspruch 4, **dadurch gekennzeichnet, dass** das Verbindungselement (33) nach Art eines an seinen Enden offenen Hohlkörpers ist, in dessen Inneres die entsprechenden Abschnitte des ersten und des zweiten Schubelements (31, 32) eingesetzt sind, und dass die elastischen Mittel (34) im Inneren des Verbindungselements (33) untergebracht sind.

6. Vorrichtung (1) nach einem oder mehreren der vorhergehenden Ansprüche, **dadurch gekennzeichnet, dass** das Vorstoßelement (28) zumindest teilweise gleitend innerhalb des Verschlusselements (25) untergebracht ist.

7. Vorrichtung (1) nach Anspruch 6, **dadurch gekennzeichnet, dass** das Verbindungselement (33) gleitend im Inneren des Verschlusselements (25) untergebracht ist, wobei letzteres mindestens eine Anschlagfläche (35) definiert, die ausgebildet ist, mit dem Verbindungselement (33) zusammenzuwirken, um es aus der geschlossenen Position heraus in seine Verschiebungsposition zu ziehen.

8. Vorrichtung (1) nach Anspruch 7, **dadurch gekennzeichnet, dass** sie mindestens ein Bodenelement (41) umfasst, das gleitend mit dem Verschlusselement (25) verriegelt ist und mindestens eine Kontaktfläche (42) definiert, die der Anschlagfläche (35) gegenüberliegt, die ausgebildet ist, mit dem Verbindungselement (33) zusammenzuwirken, um es in seine Verschiebungsposition in der Nähe der geschlossenen Position zu bewegen.

9. Vorrichtung (1) nach Anspruch 8, **dadurch gekennzeichnet, dass** sie elastische Mittel (26) umfasst, die ausgebildet sind, der Verschiebung des Verschlusselements (25) aus der geschlossenen Position in die geöffnete Position entgegenzuwirken, wobei sich die elastischen Mittel (26) gegen das Bodenelement (41) abstützen, indem sie es in Kontakt mit dem Verschlusselement (25) drücken.

10. Vorrichtung (1) nach einem oder mehreren der vorhergehenden Ansprüche, **dadurch gekennzeichnet, dass** die Anschlagfläche (27a) ausgebildet ist, mit dem ersten Ende (28a) aufgrund des Einsetzens des zweiten männlichen Verbindungsstücks (3) in das zweite weibliche Verbindungsstück (23) zusammenzuwirken, wobei das Vorstoßelement (28) in Bezug auf das zweite männliche Verbindungsstück selbst gleitet und mit den Steuermitteln (12) zusammenwirkt, um sie aus der Ausgangsstellung in die Arbeitsstellung zu verschieben.

11. Vorrichtung (1) nach Anspruch 10, **dadurch gekennzeichnet, dass** sich das Verschlusselement (25) und das erste Schubelement (31) aufgrund des Zusammenwirkens mit dem Anschlagelement (27) gleichzeitig relativ zu dem zweiten männlichen Verbindungsstück (3) verschieben.

12. Vorrichtung (1) nach einem oder mehreren der vorhergehenden Ansprüche 1 bis 9, **dadurch gekennzeichnet, dass** das Anschlagelement (27) mindestens einen Gehäusesitz (43) aufweist, der der Anschlagfläche (27a) zugewandt ist, und dass das Vorstoßelement (28) mit dem ersten Ende (28a) in den Gehäusesitz (43) eintaucht, nachdem das zweite männliche Verbindungsstück (3) in das zweite weibliche Verbindungsstück (23) eingeführt wurde, wobei das Verschlusselement (25) in Bezug auf das Vorstoßelement (28) gleitet und die Steuermittel (12) in der Ausgangsstellung verbleiben.

13. Vorrichtung (1) nach einem oder mehreren der vorhergehenden Ansprüche, **dadurch gekennzeichnet, dass** die Steuermittel (12) mindestens ein Verriegelungselement (19) aufweisen, das durch das Vorstoßelement (28) betätigbar und ausgebildet ist, mit einem der Führungselemente (11a, 11b) zusammenzuwirken, um dessen Verschiebung zu verriegeln, und dass sie Mittel (21) zum Verbinden des Vorstoßelements (28) mit dem Verriegelungselement (19) aufweist, um letzteres nach dem Zusammenwirken der Verbindungsmittel selbst mit dem Vorstoßelement (28) in die Eingriffsstellung zu bringen.

14. Vorrichtung (1) nach Anspruch 13, **dadurch gekennzeichnet, dass** die Verbindungsmittel (21) vom mechanischen oder elektrischen Typ sind.

## Revendications

1. Dispositif (1) pour la liaison véhicule tracteur-remorque, comprenant :
- au moins un premier joint mâle (2) pouvant être relié au système de freinage d'une remorque, à l'intérieur dudit premier joint mâle (2) étant prévus des premiers moyens vannes (2a) mobiles entre une position fermée et une position ouverte dans lesquelles ils empêchent et permettent le passage d'un fluide de travail, respectivement ;
- au moins un premier joint femelle pouvant être relié au système de freinage d'une remorque et adapté pour recevoir ledit premier joint mâle (2) ;
- au moins un second joint mâle (3) pouvant être relié au frein automatique et/ou de stationnement d'une remorque, à l'intérieur dudit second joint mâle (3) étant prévus des seconds moyens vannes (3a) mobiles entre une position fermée et une position ouverte dans lesquelles ils empêchent et permettent le passage d'un fluide de travail, respectivement ;
dans lequel lesdits seconds moyens vannes (3a) comprennent au moins un élément de branchement (25) logé d'une manière coulissante à l'intérieur dudit second joint mâle (3) entre ladite position fermée et ladite position ouverte,
- une vanne frein-remorque (4) comprenant un corps (5) dans lequel au moins un support (6) est formé communicant avec un orifice d'alimentation (7) pouvant être relié à une source d'un fluide de travail à une première pression, et avec au moins un orifice d'évacuation (9) du fluide de travail ;
- au moins un distributeur (10) logé d'une manière coulissante à l'intérieur dudit support (6) et mobile au moins pour placer ledit premier joint mâle (2) en communication avec ledit orifice d'alimentation (7) ou avec ledit orifice d'évacuation (9) ;
- des moyens de pilotage (11) dudit distributeur (10) qui peuvent être reliés au système de freinage d'un véhicule tracteur et comprenant au moins un premier et un second élément de pilotage (11a, 11b) qui sont adaptés pour entrer en interaction avec ledit distributeur (10) ;
- des moyens de commande (12) pouvant être actionnés par lesdits seconds moyens vannes (3a) et mobiles entre une position de repos, dans laquelle ils permettent le déplacement desdits deux éléments de pilotage (11a, 11b), et une position de travail, dans laquelle ils sont adaptés pour verrouiller le déplacement d'un parmi lesdits éléments de pilotage (11a, 11b), lesdits seconds moyens vannes (3a) comprenant au moins un élément de poussée (28) logé d'une manière coulissante à l'intérieur dudit second joint mâle (3) et adapté pour entrer en interaction avec lesdits moyens de commande (12) ;
où ledit élément de poussée (28) est mobile d'une manière coulissante par rapport audit élément de branchement (25) et a au moins une première extrémité (28a) faisant face vers l'extérieur dudit second joint mâle (3) et une seconde extrémité (28b), opposée à ladite première extrémité (28a), pouvant entrer en interaction avec lesdits moyens de commande (12) ;
**caractérisé par le fait qu'**il comprend au moins un second joint femelle (23) pouvant être relié au système de freinage de la remorque et adapté pour recevoir ledit second joint mâle (3) ;
dans lequel ledit second joint femelle (23) comprend au moins un élément de butée (27) définissant une surface de butée (27a) qui est adaptée pour entrer en interaction avec ledit élément de branchement (25) pour le déplacer de la position fermée à la position ouverte suite à l'insertion dudit second joint mâle (3),
et **par le fait que** ladite première extrémité (28a) est adaptée pour fonctionner conjointement avec ledit élément de butée (27).

2. Dispositif (1) selon la revendication 1, **caractérisé par le fait que** ledit élément de branchement (25) a au moins un trou débouchant (29) faisant face vers l'extérieur dudit second joint mâle (3) et **par le fait que** la partie dudit élément de poussée (28) définissant ladite première extrémité (28a) est insérée d'une manière coulissante à l'intérieur dudit trou débouchant (29).

3. Dispositif (1) selon la revendication 1 ou 2, **caractérisé par le fait que** ledit élément de poussée (28) comprend
- au moins un premier élément pousseur (31) définissant ladite première extrémité (28a) et au moins un second élément pousseur (32), distinct dudit premier élément pousseur (31), définissant ladite seconde extrémité (28b),
- au moins un élément de liaison (33) mécanique desdits éléments pousseurs (31, 32), et de moyens élastiques (34) interposés entre les éléments pousseurs eux-mêmes.

4. Dispositif (1) selon la revendication 3, **caractérisé par le fait que** ledit élément de liaison (33) a au moins une première et une seconde surface de référence (33a, 33b) qui sont adaptées pour entrer en interaction, respectivement, avec ledit premier élément pousseur (31) pour le tirer dans son déplacement près desdits moyens de commande (12) et avec ledit second élément pousseur (32) pour le tirer dans son déplacement à distance desdits moyens de commande (12).

5. Dispositif (1) selon la revendication 4, **caractérisé par le fait que** ledit élément de liaison (33) est du type corps creux ouvert à ses extrémités, à l'intérieur duquel sont insérées les parties correspondantes dudit premier et dudit second élément pousseur (31, 32), et **par le fait que** lesdits moyens élastiques (34) sont logés à l'intérieur dudit élément de liaison (33).

6. Dispositif (1) selon une ou plusieurs des revendications précédentes, **caractérisé par le fait que** ledit élément de poussée (28) est au moins partiellement logé d'une manière coulissante à l'intérieur dudit élément de branchement (25).

7. Dispositif (1) selon la revendication 6, **caractérisé par le fait que** ledit élément de liaison (33) est logé d'une manière coulissante à l'intérieur dudit élément de branchement (25), ce dernier définissant au moins une surface d'arrêt (35) qui est adaptée pour entrer en interaction avec ledit élément de liaison (33) pour le tirer dans son déplacement à distance de ladite position fermée.

8. Dispositif (1) selon la revendication 7, **caractérisé par le fait qu'**il comprend au moins un élément inférieur (41) verrouillé ensemble d'une manière coulissante avec ledit élément de branchement (25) et définissant au moins une surface de contact (42), opposée à ladite surface d'arrêt (35), qui est adaptée pour entrer en interaction avec ledit élément de liaison (33) pour le bouger dans son déplacement près de ladite position fermée.

9. Dispositif (1) selon la revendication 8, **caractérisé par le fait qu'**il comprend des moyens élastiques (26) qui sont adaptés pour contrer le déplacement dudit élément de branchement (25) de la position fermée à la position ouverte, dans lequel lesdits moyens élastiques (26) s'appuient contre ledit élément inférieur (41) en le poussant en contact avec ledit élément de branchement (25).

10. Dispositif (1) selon une ou plusieurs des revendications précédentes, **caractérisé par le fait que** ladite surface de butée (27a) est adaptée pour entrer en interaction avec ladite première extrémité (28a) en raison de l'insertion dudit second joint mâle (3) à l'intérieur dudit second joint femelle (23), ledit élément de poussée (28) coulissant par rapport au second joint mâle lui-même et entrant en interaction avec lesdits moyens de commande (12) pour les déplacer de la position de repos à la position de travail.

11. Dispositif (1) selon la revendication 10, **caractérisé par le fait que** ledit élément de branchement (25) et ledit premier élément pousseur (31) se déplacent simultanément par rapport audit second joint mâle (3) en raison de l'interaction avec ledit élément de butée (27).

12. Dispositif (1) selon une ou plusieurs des revendications 1 à 9 précédentes, **caractérisé par le fait que** ledit élément de butée (27) comprend au moins un support de logement (43) qui fait face à ladite surface de butée (27a) et **par le fait que** ledit élément de poussée (28) s'insère, avec ladite première extrémité (28a), à l'intérieur dudit support de logement (43) suite à l'insertion dudit second joint mâle (3) dans ledit second joint femelle (23), ledit élément de branchement (25) coulissant par rapport audit élément de poussée (28) et lesdits moyens de commande (12) restant dans la position de repos.

13. Dispositif (1) selon une ou plusieurs des revendications précédentes, **caractérisé par le fait que** lesdits moyens de commande (12) comprennent au moins un élément de verrouillage (19) pouvant être actionné par ledit élément de poussée (28) et adapté pour entrer en interaction avec un parmi lesdits éléments de pilotage (11a, 11b) pour verrouiller le déplacement de celui-ci, et **par le fait qu'**il comprend des moyens de liaison (21) dudit élément de poussée (28) audit élément de verrouillage (19), de façon à amener ce dernier dans la position d'interférence suite à l'interaction des moyens de liaison eux-mêmes avec ledit élément de poussée (28).

14. Dispositif (1) selon la revendication 13, **caractérisé par le fait que** lesdits moyens de liaison (21) sont du type mécanique ou électrique.
